# FASCICULE DE BREVET EUROPEEN

(11) **EP 4 241 027 B1**
(45) Date de publication et mention de la délivrance du brevet: **04.12.2024**
(21) Numéro de dépôt: 21787459.3
(22) Date de dépôt: 07.10.2021
(51) Int. Cl.: F25J 1/00, F25J 1/02, C25B 1/04

(54) **INSTALLATION ET PROCEDE DE PRODUCTION D'HYDROGENE A TEMPERATURE CRYOGENIQUE**
ANLAGE UND VERFAHREN ZUR HERSTELLUNG VON WASSERSTOFF BEI KRYOGENER TEMPERATUR
PLANT AND METHOD FOR PRODUCING HYDROGEN AT CRYOGENIC TEMPERATURE

(30) Priorité: 09.11.2020 FR 2011490
(43) Date de publication de la demande: 13.09.2023
(73) Titulaire: L'AIR LIQUIDE, SOCIETE ANONYME POUR L'ETUDE ET L'EXPLOITATION DES PROCEDES GEORGES CLAUDE, 75321 Paris (FR)
(72) Inventeur: BARJHOUX, Pierre, 38360 Sassenage (FR); CRESPI, Pierre, 38360 Sassenage (FR)
(74) Mandataire: Air Liquide
(86) Numéro de dépôt international: PCT/EP2021/077673
(87) Numéro de publication internationale: WO 2022/096217

(56) Documents cités:
- WO-A1-2018/027154
- JP-A- 2004 210 597
- JP-A- 2007 205 667
- US-A1- 2017 145 570
- US-A1- 2018 313 604
- US-B2- 10 351 962

## Description

L'invention concerne une installation et un procédé de production d'hydrogène à température cryogénique.

L'invention concerne plus particulièrement une installation de production d'hydrogène à température cryogénique, notamment d'hydrogène liquéfié, comprenant un électrolyseur muni d'une sortie d'oxygène et d'une sortie d'hydrogène, un circuit d'hydrogène à refroidir comprenant une extrémité amont reliée à la sortie d'hydrogène et une extrémité aval destinée à être reliée à un organe de collecte de l'hydrogène refroidi et/ou liquéfié, l'installation comprenant un ensemble d'échangeur(s) de chaleur en échange thermique avec le circuit d'hydrogène à refroidir, l'installation comprenant au moins un dispositif de refroidissement en échange thermique avec au moins une partie de l'ensemble d'échangeur(s) de chaleur, l'installation comprenant un circuit d'oxygène comprenant une extrémité amont reliée à la sortie d'oxygène et une extrémité aval, le circuit d'oxygène comprenant un système de détente du flux d'oxygène et au moins un échange de chaleur entre le flux d'oxygène détendu et le circuit d'hydrogène à refroidir.

Les deux moyens principaux de production d'hydrogène (molécule de dihydrogène H2) sont : l'électrolyse et la production chimique par vapo-reformage de méthane (SMR).

Dans le cas de l'électrolyse, la molécule d'eau est scindée, cela produit de l'hydrogène d'une part et de l'oxygène (C2) d'autre part. Les technologies d'électrolyse sont composées de trois grandes familles : « PEM » (Proton Exchange Membrane), « Alcalin » et « Oxyde Solide » (« Solid Oxide »).

Ces technologies fonctionnent de manière optimisée à une pression proche de la pression atmosphérique pour des raisons de performance énergétique et d'efficacité de la réaction chimique de craquage de la molécule d'eau.

La technologie PEM permet de fonctionner à des pressions importantes sans impacter significativement la performance énergétique de l'électrolyse. Par exemple, des électrolyseurs de plusieurs mégawatts de puissance peuvent produire de l'hydrogène et de l'oxygène à 30 bar abs à température ambiante dans l'état de l'art.

Bien que décrite par exemple dans les documents US4530744 ou US10351962, la valorisation de l'oxygène produit sous haute pression n'est généralement pas réalisée industriellement.

Ces solutions connues sont cependant peu intéressantes industriellement dans des processus de liquéfaction d'hydrogène car peu efficaces énergétiquement.

La présente invention propose une installation et un procédé innovants de valorisation de l'oxygène produit, notamment dans le cas d'un électrolyseur fonctionnant à haute pression.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que le circuit d'oxygène comprend au moins un compresseur de l'oxygène disposé en amont du système de détente du flux d'oxygène, le système de détente du flux d'oxygène comprenant une turbine de détente, ladite turbine de détente et ledit compresseur étant accouplés à un même arbre rotatif pour transférer du travail de détente du flux d'oxygène sous pression au compresseur pour comprimer le flux d'oxygène en amont de la turbine.

Une telle installation permet de valoriser de façon efficace l'oxygène (notamment à haute pression) produit par un électrolyseur pour pré-refroidir un flux d'hydrogène jusqu'à une température cryogénique.

Cette solution permet de diminuer les dépenses d'investissement d'une telle installation, notamment en supprimant ou réduisant le refroidissement jusqu'à 80 à 130K de l'hydrogène à liquéfier. Ceci permet par exemple de réduire ou de s'affranchir d'un système de pré-refroidissement à azote liquide avec station de compression azote tel que dans l'art antérieur.

La solution permet de diminuer significativement les dépenses d'exploitation correspondantes d'une telle installation (par exemple moins 30% sur l'énergie spécifique, par exemple les kWh/kg de H2 liquéfié).

Par ailleurs, des modes de réalisation de l'invention peuvent comporter l'une ou plusieurs des caractéristiques suivantes :
- l'ensemble comprenant la turbine de détente et le compresseur accouplés à un même arbre rotatif est un système mécanique passif, c'est-à-dire qu'il ne comporte pas de moteur d'entraînement de l'arbre rotatif autre que le flux d'oxygène ou un système mécanique actif, c'est-à-dire comportant un moteur d'entraînement de l'arbre rotatif,
- le circuit d'oxygène comprend plusieurs compresseurs de l'oxygène disposés en série et/ou en parallèle en amont du système de détente du flux d'oxygène, le système de détente du flux d'oxygène comprenant une pluralité de turbines de détente, chacun des compresseurs étant accouplé à un arbre rotatif sur lequel est accouplé également au moins une turbine
- le circuit d'oxygène comprend plusieurs compresseurs disposés en série en amont du système de détente du flux d'oxygène, le système de détente du flux d'oxygène comprenant une pluralité de turbines de détente et en ce que les compresseurs et turbines sont accouplés par paires sur des arbres rotatifs respectifs,
- les turbines sont disposées en série dans le circuit d'oxygène, le circuit d'oxygène comprenant des portions d'échange thermiques respectives distinctes entre l'ensemble d'échangeur(s) de chaleur et le flux d'oxygène en sortie de chaque turbine,
- l'installation comporte un système de refroidissement de l'oxygène en sortie d'au moins une partie des compresseurs,
- l'ensemble d'échangeur(s) de chaleur comprend plusieurs échangeurs de chaleurs disposés en série et en échange thermique avec le circuit d'hydrogène à refroidir entre les extrémités amont et aval du circuit d'hydrogène à refroidir,
- l'installation comporte un premier dispositif de refroidissement et un second dispositif de refroidissement en échange thermique avec le circuit d'hydrogène à refroidir, le premier dispositif de refroidissement étant en échange de chaleur avec un premier groupe d'échangeur(s) de chaleur de l'ensemble d'échangeur(s) de chaleur, le second dispositif de refroidissement étant en échange de chaleur avec un second groupe d'échangeurs de chaleur, le premier groupe d'échangeur(s) de chaleur étant situé en amont du second groupe d'échangeurs de chaleur dans le circuit d'hydrogène à refroidir, le premier dispositif de refroidissement comprenant l'échange de chaleur entre le flux d'oxygène détendu et le circuit d'hydrogène à refroidir pour assurer un pré-refroidissement du circuit d'hydrogène avant le refroidissement supplémentaire réalisé par le second dispositif de refroidissement,
- le second dispositif de refroidissement comprend un réfrigérateur à cycle de réfrigération d'un gaz de cycle, dans lequel le réfrigérateur du second dispositif de refroidissement comprend, disposés en série dans un circuit de cycle : un mécanisme de compression du second gaz de cycle, un organe de refroidissement du second gaz de cycle, un mécanisme de détente du second gaz de cycle et un organe de réchauffage du second gaz de cycle détendu,
- l'installation comprend un troisième dispositif de refroidissement en échange thermique avec au moins une partie du premier groupe d'échangeur(s) de chaleur,
- le circuit d'hydrogène à refroidir comprend un système de détente du flux d'hydrogène, le circuit d'hydrogène à refroidir comprenant un moins un compresseur de l'hydrogène en amont du système de détente du flux d'hydrogène, le système de détente du flux d'hydrogène comprenant une turbine de détente, ladite turbine de détente et ledit compresseur étant accouplés à un même arbre rotatif pour transférer du travail de détente du flux d'hydrogène sous pression au compresseur pour comprimer le flux d'hydrogène en amont de la turbine,
- l'ensemble turbine de détente et compresseur accouplés à un même arbre rotatif est de préférence un système mécanique passif, c'est-à-dire qu'il ne comporte pas de moteur d'entraînent de l'arbre rotatif autre que le flux d'hydrogène,
- le circuit d'hydrogène comprend plusieurs compresseurs de l'hydrogène disposés en série et/ou en parallèle en amont du système de détente du flux d'hydrogène, le système de détente du flux d'hydrogène comprenant une pluralité de turbines de détente disposées en série et/ou en parallèle et en ce que chacun des compresseurs est accouplé à un arbre rotatif sur lequel est accouplée également au moins une turbine,
- le circuit d'hydrogène à refroidir comprend plusieurs compresseurs disposés en série en amont du système de détente du flux d'hydrogène, le système de détente du flux d'hydrogène comprenant une pluralité de turbines de détente disposées en série, les compresseurs et turbines étant accouplés par paires sur des arbres rotatifs respectifs,
- les turbines sont disposées en série dans le circuit d'hydrogène à refroidir, le circuit d'hydrogène à refroidir comprenant des portions d'échange thermiques respectives distinctes entre l'ensemble d'échangeur(s) de chaleur et le flux d'hydrogène en sortie de chaque turbine,
- le système de détente du flux d'hydrogène est situé sur une portion du circuit d'hydrogène à refroidir en échange thermique avec le premier groupe d'échangeur(s) de chaleur,
- le système de détente du flux d'hydrogène est situé sur une portion du circuit d'hydrogène à refroidir en échange thermique avec le second groupe d'échangeur(s) de chaleur,
- l'installation comporte un système de refroidissement de l'hydrogène en sortie d'au moins une partie des compresseurs. L'invention concerne également un procédé de production d'hydrogène à température cryogénique, notamment d'hydrogène liquéfié, utilisant une installation selon l'une quelconque des caractéristiques précédentes, le procédé comprenant une étape de fourniture, par l'électrolyseur, d'un flux d'hydrogène à l'extrémité amont du circuit d'hydrogène, par exemple à une pression comprise entre 15 et 150 bar, une étape de fourniture, par l'électrolyseur, d'un flux d'oxygène à l'extrémité amont du circuit d'oxygène, par exemple à une pression comprise entre 15 et 150 bar, le procédé comprenant une étape de compression puis de détente du flux d'oxygène dans lequel la détente est réalisée par au moins une turbine accouplée à un arbre, l'arbre étant également accouplé à au moins un compresseur assurant la compression du flux d'oxygène avant sa détente, le procédé comprenant un échange thermique entre le flux d'oxygène détendu avec le flux d'hydrogène en vue de son refroidissement ;

Selon d'autres particularités possibles :
- le procédé comprend une étape de compression puis de détente du flux d'hydrogène en vue de son refroidissement dans lequel la détente est réalisée par au moins une turbine accouplée à un arbre, l'arbre étant également accouplé à au moins un compresseur assurant la compression du flux d'hydrogène avant sa détente. L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

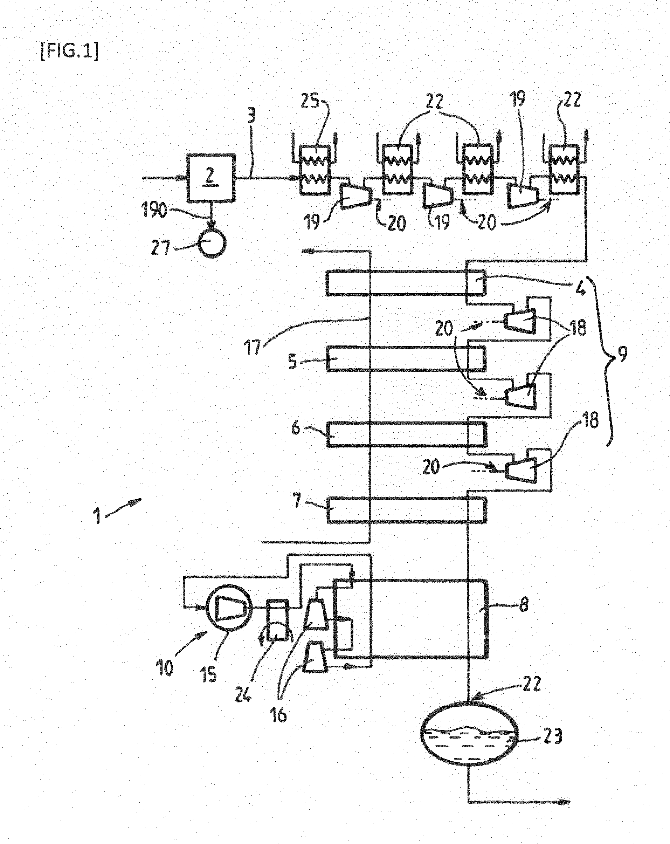

   [Fig. 1] représente une vue schématique et partielle illustrant un premier exemple de réalisation de structure et de fonctionnement d'une installation pas selon l'invention,
   [Fig. 2] représente une vue schématique et partielle illustrant un deuxième exemple de réalisation de structure et de fonctionnement d'une installation selon l'invention,
   [Fig. 3] représente une vue schématique et partielle illustrant un troisième exemple de réalisation de structure et de fonctionnement d'une installation selon l'invention,
   [Fig. 4] représente une vue schématique et partielle illustrant un quatrième exemple de réalisation de structure et de fonctionnement d'une installation selon l'invention.

L'installation 1 de production d'hydrogène représentée est un dispositif pour produire de l'hydrogène à température cryogénique, notamment de l'hydrogène liquéfié.

Cette installation 1 comprend un électrolyseur 2, de préférence de type « PEM » (à membrane échangeuse de proton) fonctionnant à haute pression, c'est-à-dire produisant de l'hydrogène et de l'oxygène gazeux à des pressions comprises entre 15 et 150 bar par exemple égale à 30bar.

L'électrolyseur 2 possède une sortie d'oxygène et une sortie d'hydrogène.

L'installation 1 comprend un circuit 3 (ou conduite(s)) d'hydrogène à refroidir ayant une extrémité amont reliée à la sortie d'hydrogène de l'électrolyseur 2 et une extrémité aval 23 destinée à être reliée à un organe de collecte de l'hydrogène refroidi et/ou liquéfié (stockage et/ou application utilisatrice par exemple).

L'installation 1 comprend un ensemble d'échangeur(s) 4, 5, 6, 7, 8 de chaleur en échange thermique avec le circuit 3 d'hydrogène à refroidir, dans le but d'atteindre une température propice à la liquéfaction de l'hydrogène.

Comme illustré, au moins un échangeur de chaleur 25 distinct peut être prévu en sortie de l'électrolyseur pour refroidir le flux d'hydrogène (par exemple par échange thermique avec un caloporteur tel que de l'eau ou de l'air par exemple) pour ramener ce dernier à une température proche de la température ambiante. La réaction électrochimique de production de l'hydrogène par électrolyse conduit généralement à une élévation de température de quelques dizaines de degrés.

L'installation 1 comporte en outre au moins un dispositif 9, 10 de refroidissement en échange thermique avec au moins une partie de l'ensemble d'échangeur(s) 4, 5, 6, 7, 8 de chaleur.

De plus, l'installation 1 comprenant un circuit 190 d'oxygène (au moins une conduite) comprenant une extrémité amont reliée à la sortie d'oxygène de l'électrolyseur 2 et une extrémité aval 11. L'extrémité aval peut être reliée par exemple à un dispositif de collecte et/ou d'utilisation de l'oxygène.

Ce circuit 190 d'oxygène comprend un système 13 de détente du flux d'oxygène et au moins un échange de chaleur entre le flux d'oxygène détendu (et donc refroidi par la détente) et le circuit 3 d'hydrogène à refroidir. Cet échange de chaleur peut notamment être utilisé pour pré-refroidir l'hydrogène dans son processus de réfrigération et/ou liquéfaction.

Selon une particularité avantageuse, le circuit 190 d'oxygène comprend un moins un compresseur 12 de l'oxygène disposé en amont du système 13 de détente du flux d'oxygène. Le système 13 de détente du flux d'oxygène comprend au moins une turbine 13 de détente. Ladite turbine 13 de détente de l'oxygène et ledit compresseur 12 amont de l'oxygène sont accouplés à un même arbre 14 rotatif pour transférer du travail de détente du flux d'oxygène sous pression au compresseur 12 pour comprimer le flux d'oxygène en amont de la turbine 13 de détente.

L'ensemble comprenant la turbine 13 de détente et le compresseur 12 accouplés à un même arbre 14 rotatif est de préférence un système mécanique passif, c'est-à-dire qu'il ne comporte pas de moteur d'entraînement de l'arbre 14 rotatif autre que le flux d'oxygène. Ainsi, la turbine 13 de détente est freinée mécaniquement par le compresseur 12 accouplé sur le même arbre 14. Bien entendu, ceci n'est pas limitatif, il pourrait ainsi être envisagé de prévoir un système avec moteur dont l'arbre est accouplé aux turbine (s) et compresseur (s) (pour améliorer le rendement de l'installation si c'est approprié).

Ce transfert de travail réalise une « suralimentation » (« turbo boosting ») qui consiste donc à intégrer une ou plusieurs turbines 13 de détente cryogénique pour lesquelles le fluide de travail est l'oxygène précédemment produit par l'électrolyseur 2. Le système de freinage de ces turbines est un ou plusieurs compresseurs 12 accouplés sur le même arbre 14. Ceci permet d'injecter le travail de détente de ce flux de gaz comme surpresseur du flux en amont à température ambiante.

Comme illustré, pour transférer ces frigories produites au flux d'hydrogène, il est possible d'intégrer dans le ou les échangeurs 4, 5, 6, 7 des passages spécifiques, indépendants du flux principal d'hydrogène, pour permettre à l'oxygène refroidi d'échanger des frigories/calories avec l'hydrogène à refroidir.

L'intégration du flux d'oxygène détendu dans la batterie d'échangeurs de chaleur 4, 5, 6, 7 du système de réfrigération/liquéfaction de l'hydrogène permet notamment de réduire son volume. Les coûts sont également réduits en mutualisant les lignes d'échange thermique dans un seul et même équipement. De plus, il est possible d'utiliser un caloporteur intermédiaire typiquement inerte, hélium, azote argon par exemple afin de ne pas risquer de mettre en contact dans un même équipement de l'hydrogène et de l'oxygène.

Ce froid apporté sans consommation énergétique permet de réduire le travail à fournir pour refroidir l'hydrogène jusqu'à sa température cible (par exemple via un second dispositif 10 de refroidissement comme décrit plus en détail ci-après).

Par exemple, l'hydrogène est refroidi jusqu'à une température cible autour de 20K par exemple. Pour cela, le flux d'hydrogène peut être pré-refroidi entre la température en sortie de l'électrolyseur jusqu'à une température comprise entre 220 et 90K et par exemple de l'ordre de 100K.

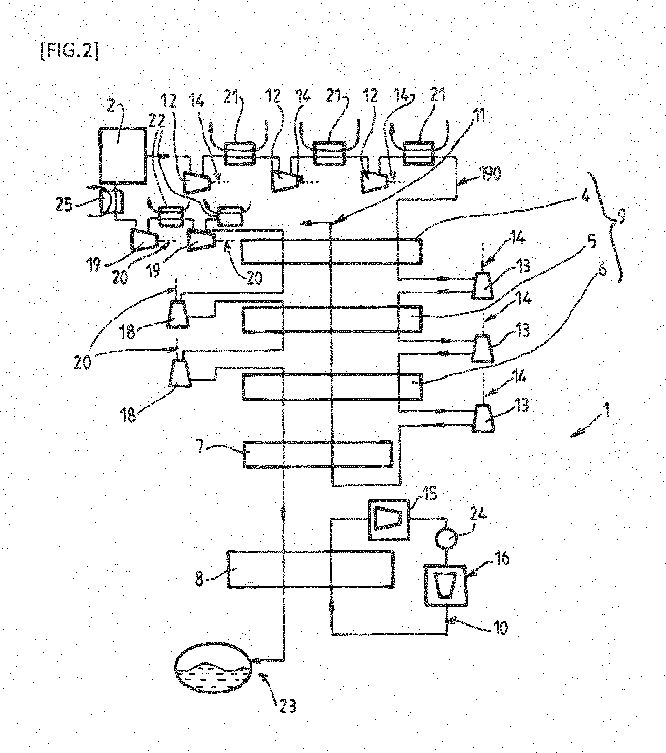

Avant détente (en aval des compresseurs 12) l'oxygène peut par exemple être amené à une pression comprise entre 15 et 150 bar et à une température proche de la température ambiante, grâce à des échangeurs de refroidissement inter-étage de compression (puis terminal) qui disposent d'une source froide de type eau industrielle par exemple. Tout ou partie de ce pré-refroidissement peut être réalisé via l'oxygène détendu comme décrit précédemment. L'installation 1 peut comprendre un troisième dispositif 17 de refroidissement (pas indiqué dans la [Fig. 2]) en échange thermique avec au moins une partie des échangeurs de chaleur 4, 5, 6, 7. Ce troisième dispositif 17 de refroidissement peut comprendre une boucle de fluide de refroidissement (azote liquide par exemple circulant à contre-courant) qui fournit du froid au(x) échangeur(s) 4, 5, 6, 7 de chaleur pour assurer également une partie du pré-refroidissement de l'hydrogène.

Le pré-refroidissement réalisé via l'oxygène comme décrit ci-dessus peut notamment permettre de réduire (notamment diviser par deux) la consommation d'un tel fluide de refroidissement (type azote liquide ou à cycle de mélange de gaz par exemple). Les inventeurs ont déterminé notamment que cette valorisation de la pression d'oxygène avec surpression permet d'économiser environ 45% de la consommation d'azote liquide (économie d'énergie électrique consommée pour produire de l'azote liquide) pour une installation produisant 25 tonnes d'hydrogène par jour devant être refroidi de 300K à 85K.

Bien entendu cet avantage subsiste en cas d'utilisation d'un autre dispositif de pré-refroidissement (refroidisseur à cycle d'azote par exemple).

Dans le cas où la pression du flux d'oxygène à la sortie d'électrolyseur 2 est de l'ordre de 70 bar, on peut atteindre une économie sur les dépenses d'exploitation de l'ordre de 50 à 70% de la fonction de pré-refroidissement du flux d'hydrogène.

Comme illustré, le circuit 190 d'oxygène peut comprendre plusieurs compresseurs 12 d'oxygène disposés en série en amont du système 13 de détente du flux d'oxygène. Le système de détente du flux d'oxygène comprend quant à lui une pluralité de turbines 13 de détente et chacun des compresseurs 12 est accouplé à un arbre 14 rotatif sur lequel est accouplé également au moins une turbine 13.

Par exemple tout ou partie de ces éléments pourrait être intégrés dans une (par exemple unique) turbomachine possédant n turbines et n compresseurs montés de part et d'autre d'un même arbre.

Dans l'exemple non limitatif illustré, le circuit 190 d'oxygène comprend autant de compresseurs 12 disposés en série en amont que de turbines 13 de détente disposées en série en aval, les compresseurs et turbines 13 sont accouplés par paires sur des arbres 14 rotatifs respectifs. Par exemple la première turbine (amont) est accouplée avec le premier compresseur (en amont), la seconde turbine avec le second compresseur etc...

Bien entendu, l'invention n'est pas limitée à cette configuration ne comprenant que des "turboboosters", il est possible de prévoir des « turboboosters » de ce type et, en plus, une ou des turbines classiques.

Bien entendu, certains compresseurs ou turbines peuvent ne pas être accouplé(es) à un arbre sur lequel est accouplé également une autre roue d'une turbine (ou respectivement d'un compresseur). C'est-à-dire que toutes les turbines (ou compresseurs) ne sont pas forcément accouplé(e)s au même arbre qu'un compresseur et inversement. De même, plus de deux roues (compresseurs et/ou turbines) peuvent être accouplées à un même arbre.

De préférence, un système 21 de refroidissement de l'oxygène est prévu en sortie d'au moins une partie des compresseurs 12. Par exemple, un refroidisseur (échangeur de refroidissement en échange avec un fluide tel que l'air ou l'eau) peut être interposé à la sortie de chaque compresseur afin d'améliorer le rendement isotherme de chaque étage de compression.

L'ensemble d'échangeur(s) 4, 5, 6, 7, 8 de chaleur comprend ainsi de préférence plusieurs échangeurs de chaleur disposés en série et en échange thermique avec le circuit 3 d'hydrogène à refroidir entre les extrémités amont et aval du circuit 3 d'hydrogène à refroidir.

De plus, de préférence, après la sortie des turbines 13 en série, le flux d'oxygène passe dans respectivement les échangeurs 4, 5, 6, 7 de chaleur en série d'amont vers l'aval. Ce passage dans les échangeurs forme ainsi, un refroidissement ou un réchauffage du flux d'oxygène après chaque étage de détente (refroidissement ou réchauffage selon les conditions de pression du flux d'oxygène et de la température de l'échangeur 4, 5, 6, 7 concerné). En effet, lorsque la chute de la pression du flux d'oxygène aux bornes de la turbine est relativement importante, l'échange thermique avec l'échangeur thermique 4, 5, 6, 7 situé en sortie va avoir tendance à réchauffer le flux (dans un but d'optimisation thermodynamique du cycle de réfrigération du flux d'hydrogène) tandis que, au contraire, en cas de chute de pression relativement plus basse, le passage dans l'échangeur thermique 4, 5, 6, 7 situé en sortie va avoir tendance à refroidir le flux (comme représenté sur la figure 2 ).

Ce pré-refroidissement de l'hydrogène peut être complété en aval du circuit 3 par un second dispositif 10 de refroidissement en échange thermique avec le circuit 3 d'hydrogène à refroidir. Comme illustré, par exemple, le premier dispositif 9 de refroidissement précité (oxygène détendu) est mis en échange de chaleur avec un premier groupe d'échangeur(s) de chaleur 4, 5, 6, 7 en amont de l'ensemble d'échangeur(s) 4, 5, 6, 7 de chaleur. Le second dispositif 10 de refroidissement peut quant à lui être mis en échange de chaleur avec un second groupe d'échangeurs de chaleur 8 en aval (symbolisé ici par un seul échangeur de chaleur mais plusieurs échangeurs de chaleur en série et/ou en parallèle peuvent être envisagés).

Après le pré-refroidissement du circuit 3 d'hydrogène à une température de 80 à 100K par exemple, le second dispositif 10 de refroidissement assure un refroidissement supplémentaire de l'hydrogène, par exemple jusqu'à une température de l'ordre de 20K en vue de le liquéfier.

Comme schématisé, le second dispositif 10 de refroidissement peut comprendre un réfrigérateur à cycle de réfrigération d'un gaz de cycle (comprenant par exemple de l'hydrogène ou de l'hélium, ou du néon ou une combinaison optimisée de ces trois derniers) pour améliorer le rendement du dispositif 10 de refroidissement final de l'hydrogène. Classiquement, ce réfrigérateur du second dispositif 10 de refroidissement peut comprendre, disposés en série dans un circuit de cycle : un mécanisme 15 de compression du second gaz de cycle (un ou plusieurs compresseurs), un organe 24 de refroidissement du second gaz de cycle (échangeur(s) de chaleur par exemple), un mécanisme 16 de détente du second gaz de cycle (turbine(s) et/ou vanne(s) de détente) et un organe 8 de réchauffage du second gaz de cycle détendu (échangeurs de chaleur et notamment échangeur(s) de chaleur en échange avec le flux d'hydrogène à refroidir).

La [Fig. 2] représente en outre un autre mode de réalisation possible qui comporte en plus un système de valorisation de la pression du flux d'hydrogène à refroidir. Par souci de concision, les mêmes éléments ne sont pas décrits à nouveau et sont désignés par les mêmes références numériques (idem pour les modes de réalisation suivants).

Comme illustré, dans l'installation de la [Fig. 2], le circuit 3 d'hydrogène à refroidir comprend un système 18 de détente du flux d'hydrogène et au moins un compresseur 19 de l'hydrogène en amont du système 18 de détente du flux d'hydrogène. Comme précédemment pour l'oxygène, le système 18 de détente du flux d'hydrogène comprend au moins une turbine 18 de détente du flux d'hydrogène et ladite turbine 18 de détente et ledit compresseur 19 sont accouplés à un même arbre 20 rotatif pour transférer du travail de détente du flux d'hydrogène sous pression au compresseur 19 pour comprimer le flux d'hydrogène en amont de la turbine 18. L'ensemble turbine 18 de détente et compresseur 19 accouplés à un même arbre 20 rotatif est un système mécanique de préférence passif, c'est-à-dire qu'il ne comporte pas de moteur d'entraînement de l'arbre 20 rotatif autre que le flux d'hydrogène.

Comme illustré, le circuit 3 d'hydrogène comprend de préférence plusieurs compresseurs 19 de l'hydrogène disposés en série en amont du système 18 de détente du flux d'hydrogène. Le système de détente du flux d'hydrogène comprend de préférence autant de turbines 18 de détente disposées en série, chacun des compresseurs 19 étant accouplé à un arbre 20 rotatif sur lequel est accouplée également au moins une turbine 18. Par exemple, les compresseurs 19 et turbines sont associés par paires sur des arbres 20 rotatifs respectifs distincts (par exemple premier compresseur 19 amont accouplé avec la première turbine 20 amont etc...) .

Comme illustré, en sortie de chaque turbine 18, le flux d'hydrogène détendu peut éventuellement passer dans respectivement des échangeurs de chaleur distincts d'amont en aval du premier groupe d'échangeur(s) de chaleur 4, 5, 6, 7, pour assurer un pré-refroidissement de l'hydrogène.

Ces étages de détente 18 permettent de valoriser la pression du flux d'hydrogène (avec refroidissement(s) intermédiaire(s) ou non). Ceci permet de remplacer ou suppléer le pré-refroidissement décrit ci-dessus.

Bien entendu, ce mode de détente et de valorisation de la pression du flux d'hydrogène n'est pas limité à cet exemple. Ainsi, la détente de l'hydrogène depuis la température ambiante jusqu'à une température déterminée de pré-refroidissement pourrait être réalisée en plusieurs étages de détente radiaux ou bien en un seul étage de détente, par exemple via un détendeur volumétrique, notamment pour réduire les coûts.

Dans le mode de réalisation de la [Fig. 2] les compresseurs 19 du flux d'hydrogène sont situés en amont du premier groupe d'échangeurs 4, 5, 6, 7 de pré-refroidissement (par exemple à température ambiante) et les turbines dans la partie de pré-refroidissement (échange de chaleur en sortie des turbines 18 avec ces échangeurs de chaleur 4, 5, 6, 7 de pré-refroidissement).

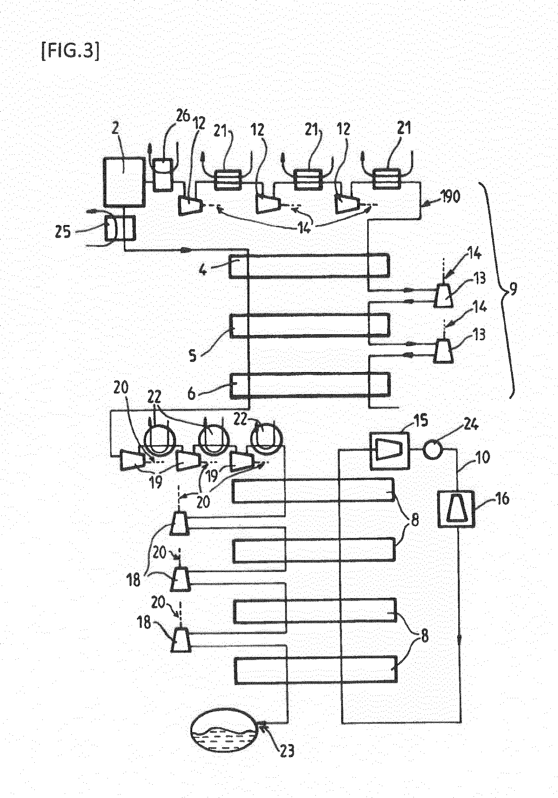

Le mode de réalisation de la [Fig. 3] se distingue de celui de la [Fig. 2] essentiellement en ce que les compresseurs 19 du flux d'hydrogène sont situés en aval du premier groupe d'échangeurs 4, 5, 6 de pré-refroidissement et en amont du second groupe d'échangeurs 8 de refroidissement (dans la partie du circuit 3 où l'hydrogène est déjà pré-refroidi). C'est-à-dire que la compression du flux d'hydrogène est réalisée après pré-refroidissement et avant refroidissement final. Ceci permet d'obtenir un taux de compression plus conséquent sur une molécule H2 très légère (masse molaire -2 g/mol). De plus, les turbines 18 de détente sont intercalées dans la partie de refroidissement (échange de chaleur en sortie des turbines 18 avec ces échangeurs de chaleur 8 du deuxième groupe).

A noter également que le mode de réalisation illustre la possibilité facultative (et pouvant s'appliquer aux autres modes de réalisation) de prévoir un refroidissement 26 du flux d'oxygène sortant de l'électrolyseur 2 en amont du premier compresseur 12.

Dans le mode de réalisation de la [Fig. 2] les compresseurs 19 du flux d'hydrogène sont situés en amont du premier groupe d'échangeurs 4, 5, 6, 7 de pré-refroidissement et les turbines dans la partie de pré-refroidissement (échange de chaleur en sortie des turbines 18 avec ces échangeurs de chaleur 4, 5, 6, 7 de pré-refroidissement).

Le mode de réalisation de la [Fig. 3] se distingue de celui de la [Fig. 2] essentiellement en ce que les compresseurs 19 du flux d'hydrogène sont situés en aval du premier groupe d'échangeurs 4, 5, 6 de pré-refroidissement et en amont du second groupe d'échangeurs 8 de refroidissement. C'est-à-dire que la compression du flux d'hydrogène est réalisée après pré-refroidissement et avant refroidissement. De plus, les turbines 18 de détente sont intercalées dans la partie de refroidissement (échange de chaleur en sortie des turbines 18 avec ces échangeurs de chaleur 8 du deuxième groupe).

A noter également que ce mode de réalisation illustre la possibilité facultative (et pouvant s'appliquer aux autres modes de réalisation) de prévoir un refroidissement 26 du flux d'oxygène sortant de l'électrolyseur 2 en amont du premier compresseur 12.

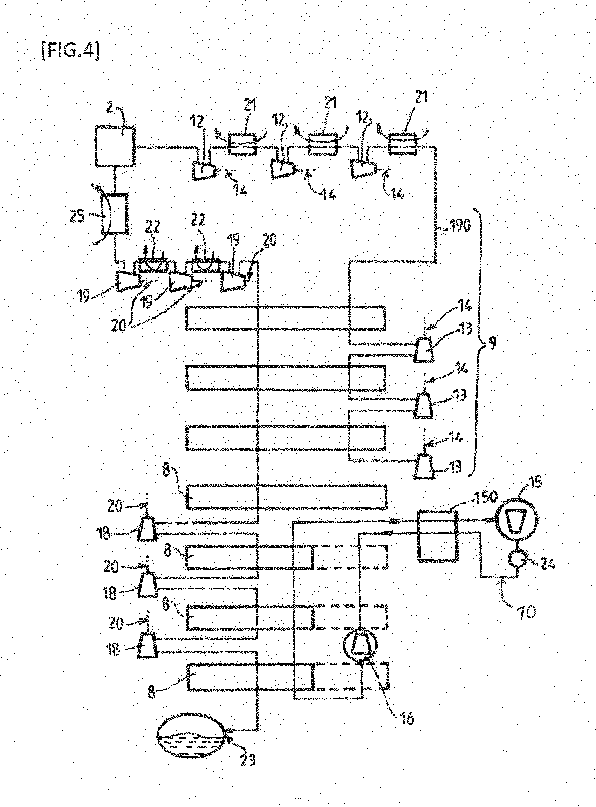

Le mode de réalisation de la [Fig. 4] se distingue de celui de la [Fig. 3] essentiellement en ce que les compresseurs 19 du flux d'hydrogène sont situés en amont du premier groupe d'échangeurs de pré-refroidissement. C'est-à-dire que la compression du flux d'hydrogène est réalisée avant pré-refroidissement (à température ambiante par exemple) tandis que la détente est réalisée en partie froide de refroidissement (après pré-refroidissement).

Comme schématisé à la [Fig. 4], (ceci peut s'appliquer aux autres modes de réalisation), le second dispositif 10 de réfrigération peut comporter une ou plusieurs turbines 16 en série et/ou en parallèle. De plus, les flux en amont et en aval du ou des compresseurs 15 peuvent échanger thermiquement à contre-courant dans un même échangeur de chaleur 150. Le ou les flux en sortie de la ou des turbines peuvent éventuellement échanger dans le ou les échangeurs 8 de chaleur du second groupe (représentation en pointillés).

Les turbines sont de préférence du type de technologie radiale et centripète. Ceci permet une mutualisation des technologies de détente sur l'ensemble de l'installation de liquéfaction.

Les compresseurs sont de préférence sont du type centrifuge.

Dans une variante non représentée en détail, le circuit 190 d'oxygène produit en aval de l'oxygène liquéfié qui est récupéré. A cet effet, tout ou partie du flux d'oxygène peut transiter dans des échangeurs de chaleurs distincts des échangeurs 4, 5, 6, 7, 8 en échange avec le flux d'hydrogène.

## Revendications

1. Installation de production d'hydrogène à température cryogénique, notamment d'hydrogène liquéfié, comprenant un électrolyseur (2) muni d'une sortie d'oxygène et d'une sortie d'hydrogène, un circuit (3) d'hydrogène à refroidir comprenant une extrémité amont reliée à la sortie d'hydrogène et une extrémité aval destinée à être reliée à un organe (23) de collecte de l'hydrogène refroidi et/ou liquéfié, l'installation (1) comprenant un ensemble d'échangeur(s) (4, 5, 6, 7, 8) de chaleur en échange thermique avec le circuit (3) d'hydrogène à refroidir, l'installation (1) comprenant au moins un dispositif (9, 10) de refroidissement en échange thermique avec au moins une partie de l'ensemble d'échangeur(s) (4, 5, 6, 7, 8) de chaleur, l'installation (1) comprenant un circuit (190) d'oxygène comprenant une extrémité amont reliée à la sortie d'oxygène et une extrémité aval (11), le circuit (190) d'oxygène comprenant un système (13) de détente du flux d'oxygène et au moins un échange de chaleur entre le flux d'oxygène détendu et le circuit (3) d'hydrogène à refroidir, le circuit (190) d'oxygène comprenant au moins un compresseur (12) de l'oxygène disposé en amont du système (13) de détente du flux d'oxygène, le système (13) de détente du flux d'oxygène comprenant une turbine (13) de détente **caractérisée en ce que** ladite turbine (13) de détente et ledit compresseur (12) sont accouplés à un même arbre (14) rotatif pour transférer du travail de détente du flux d'oxygène sous pression au compresseur (12) pour comprimer le flux d'oxygène en amont de la turbine (13).

2. Installation selon la revendication 1, **caractérisée en ce que** l'ensemble comprenant la turbine (13) de détente et le compresseur (12) accouplés à un même arbre (14) rotatif est un système mécanique passif, c'est-à-dire qu'il ne comporte pas de moteur d'entraînement de l'arbre (14) rotatif autre que le flux d'oxygène, ou l'ensemble comprenant la turbine (13) de détente et le compresseur (12) accouplés à un même arbre (14) rotatif est un système mécanique actif, c'est-à-dire comportant un moteur d'entraînement de l'arbre (14) rotatif.

3. Installation selon la revendication 1 ou 2, **caractérisée en ce que** le circuit (190) d'oxygène comprend plusieurs compresseurs (12) de l'oxygène disposés en série et/ou en parallèle en amont du système (13) de détente du flux d'oxygène, le système de détente du flux d'oxygène comprenant une pluralité de turbines (13) de détente et **en ce que** chacun des compresseurs (12) est accouplé à un arbre (14) rotatif sur lequel est accouplé également au moins une turbine (13).

4. Installation selon l'une quelconque des revendications 1 à 3, **caractérisée en ce que** le circuit (190) d'oxygène comprend plusieurs compresseurs (12) disposés en série en amont du système (13) de détente du flux d'oxygène, le système (13) de détente du flux d'oxygène comprenant une pluralité de turbines (13) de détente et **en ce que** les compresseurs et turbines (13) sont accouplés par paires sur des arbres (14) rotatifs respectifs.

5. Installation selon l'une quelconque des revendications 3 ou 4, **caractérisée en ce que** les turbines (14) sont disposées en série dans le circuit (190) d'oxygène, le circuit (190) d'oxygène comprenant des portions d'échange thermiques respectives distinctes entre l'ensemble d'échangeur(s) (4, 5, 6, 7, 8) de chaleur et le flux d'oxygène en sortie de chaque turbine (13) l'installation comprenant éventuellement un système (21) de refroidissement de l'oxygène en sortie d'au moins une partie des compresseurs (12).

6. Installation selon l'une quelconque des revendications 1 à 5, **caractérisée en ce que** l'ensemble d'échangeur(s) (4, 5, 6, 7, 8) de chaleur comprend plusieurs échangeurs de chaleurs disposés en série et en échange thermique avec le circuit (3) d'hydrogène à refroidir entre les extrémités amont et aval du circuit (3) d'hydrogène à refroidir.

7. Installation selon la revendication 6, **caractérisée en ce qu'**elle comporte un premier dispositif (9) de refroidissement et un second dispositif (10) de refroidissement en échange thermique avec le circuit (3) d'hydrogène à refroidir, le premier dispositif (9) de refroidissement étant en échange de chaleur avec un premier groupe d'échangeur(s) de chaleur (4, 5, 6, 7) de l'ensemble d'échangeur(s) (4, 5, 6, 7, 8) de chaleur, le second dispositif (10) de refroidissement étant en échange de chaleur avec un second groupe d'échangeurs de chaleur (8), le premier groupe d'échangeur(s) de chaleur (4, 5, 6, 7) étant situé en amont du second groupe d'échangeurs de chaleur (8) dans le circuit (3) d'hydrogène à refroidir, et **en ce que** le premier dispositif (9) de refroidissement comprend l'échange de chaleur entre le flux d'oxygène détendu et le circuit (3) d'hydrogène à refroidir pour assurer un pré-refroidissement du circuit (3) d'hydrogène avant le refroidissement supplémentaire réalisé par le second dispositif (10) de refroidissement.

8. Installation selon la revendication 7, **caractérisée en ce que** le second dispositif (10) de refroidissement comprend un réfrigérateur à cycle de réfrigération d'un gaz de cycle, dans lequel le réfrigérateur du second dispositif (10) de refroidissement comprend, disposés en série dans un circuit de cycle : un mécanisme (15) de compression du second gaz de cycle, un organe (24) de refroidissement du second gaz de cycle, un mécanisme (16) de détente du second gaz de cycle et un organe (8) de réchauffage du second gaz de cycle détendu.

9. Installation selon la revendication 7 ou 8, **caractérisée en ce qu'**elle comprend un troisième dispositif (17) de refroidissement en échange thermique avec au moins une partie du premier groupe d'échangeur(s) de chaleur (4, 5, 6, 7) .

10. Installation selon l'une quelconque des revendications 1 à 9, **caractérisée en ce que** le circuit (3) d'hydrogène à refroidir comprend un système (18) de détente du flux d'hydrogène, le circuit (3) d'hydrogène à refroidir comprenant au moins un compresseur (19) de l'hydrogène en amont du système (18) de détente du flux d'hydrogène, le système (18) de détente du flux d'hydrogène comprenant une turbine (18) de détente et **en ce que** ladite turbine (18) de détente et ledit compresseur (19) sont accouplés à un même arbre (20) rotatif pour transférer du travail de détente du flux d'hydrogène sous pression au compresseur (19) pour comprimer le flux d'hydrogène en amont de la turbine (18).

11. Installation selon la revendication 10, **caractérisée en ce que** l'ensemble turbine (18) de détente et compresseur (19) accouplés à un même arbre (20) rotatif est un système mécanique passif, c'est-à-dire qu'il ne comporte pas de moteur d'entraînement de l'arbre (20) rotatif autre que le flux d'hydrogène.

12. Installation selon la revendication 10 ou 11, **caractérisée en ce que** le circuit (3) d'hydrogène comprend plusieurs compresseurs (19) de l'hydrogène disposés en série et/ou en parallèle en amont du système (18) de détente du flux d'hydrogène, le système de détente du flux d'hydrogène comprenant une pluralité de turbines (18) de détente disposées en série et/ou en parallèle et **en ce que** chacun des compresseurs (19) est accouplé à un arbre (20) rotatif sur lequel est accouplée également au moins une turbine (18).

13. Installation selon la revendication 11 ou 12, **caractérisée en ce que** le circuit (3) d'hydrogène à refroidir comprend plusieurs compresseurs (19) disposés en série en amont du système (18) de détente du flux d'hydrogène, le système de détente du flux d'hydrogène comprenant une pluralité de turbines (18) de détente disposées en série et **en ce que** les compresseurs et turbines (18) sont accouplés par paires sur des arbres (20) rotatifs respectifs.

14. Installation selon la revendication 11 ou 12, **caractérisée en ce que** les turbines (18) sont disposées en série dans le circuit (3) d'hydrogène à refroidir, le circuit (3) d'hydrogène à refroidir comprenant des portions d'échange thermique respectives distinctes entre l'ensemble d'échangeur(s) (4, 5, 6, 7, 8) de chaleur et le flux d'hydrogène en sortie de chaque turbine (18).

15. Installation selon l'une quelconque des revendications 7 à 8 combinée à l'une quelconque des revendications 9 à 13, **caractérisée en ce que** le système (18) de détente du flux d'hydrogène est situé sur une portion du circuit (3) d'hydrogène à refroidir en échange thermique avec le premier groupe d'échangeur(s) de chaleur (4, 5, 6, 7).

16. Installation selon l'une quelconque des revendications 7 à 8 combinée à l'une quelconque des revendications 9 à 13, **caractérisée en ce que** le système (18) de détente du flux d'hydrogène est situé sur une portion du circuit (3) d'hydrogène à refroidir en échange thermique avec le second groupe d'échangeur(s) de chaleur (8).

17. Installation selon l'une quelconque des revendications 12 à 16, **caractérisée en ce qu'**elle comporte un système (22) de refroidissement de l'hydrogène en sortie d'au moins une partie des compresseurs (19).

18. Procédé de production d'hydrogène à température cryogénique, notamment d'hydrogène liquéfié, utilisant une installation (1) selon l'une quelconque des revendications précédentes, le procédé comprenant une étape de fourniture, par l'électrolyseur (2), d'un flux d'hydrogène à l'extrémité amont du circuit (3) d'hydrogène, par exemple à une pression comprise entre 15 et 150 bar, une étape de fourniture, par l'électrolyseur (2), d'un flux d'oxygène à l'extrémité amont du circuit (190) d'oxygène, par exemple à une pression comprise entre 15 et 150 bar, le procédé comprenant une étape de compression puis de détente du flux d'oxygène dans lequel la détente est réalisée par la au moins une turbine (13) accouplée à l'arbre (14), l'arbre (14) étant également accouplé au moins un compresseur (12) assurant la compression du flux d'oxygène avant sa détente, le procédé comprenant un échange thermique entre le flux d'oxygène détendu avec le flux d'hydrogène en vue de son refroidissement.

19. Procédé selon la revendication 18, **caractérisé en ce que** le procédé comprend une étape de compression puis de détente du flux d'hydrogène en vue de son refroidissement dans lequel la détente est réalisée par au moins une turbine (18) accouplée à un arbre (20), l'arbre (20) étant également accouplé à au moins un compresseur (19) assurant la compression du flux d'hydrogène avant sa détente.

## Patentansprüche

1. Anlage zur Herstellung von Wasserstoff bei Kryogen-Temperatur, insbesondere von Flüssigwasserstoff, umfassend einen Elektrolyseur (2), der mit einem Sauerstoffauslass und einem Wasserstoffauslass ausgestattet ist, einen Kreislauf (3) von zu kühlendem Wasserstoff, umfassend ein stromaufwärts gelegenes Ende, das mit dem Wasserstoffauslass verbunden ist, und ein stromabwärts gelegenes Ende, das dazu bestimmt ist, mit einem Element (23) zum Auffangen des gekühlten und/oder verflüssigten Wasserstoffs verbunden zu werden, wobei die Anlage (1) eine Wärmetauschereinheit bzw. Einheit von Wärmetauschern (4, 5, 6, 7, 8) umfasst, die mit dem Kreislauf von zu kühlendem Wasserstoff (3) im Wärmeaustausch steht, wobei die Anlage (1) mindestens eine Kühlvorrichtung (9, 10) umfasst, die mit mindestens einem Teil der Wärmetauschereinheit bzw. Einheit von Wärmetauschern (4, 5, 6, 7, 8) im Wärmeaustausch steht, wobei die Anlage (1) einen Sauerstoffkreislauf (190) umfasst, umfassend ein stromaufwärts gelegenes Ende, das mit dem Sauerstoffauslass verbunden ist, und ein stromabwärts gelegenes Ende (11), wobei der Sauerstoffkreislauf (190) ein System (13) zum Entspannen des Sauerstoffstroms und mindestens einen Wärmeaustausch zwischen dem entspannten Sauerstoffstrom und dem Kreislauf von zu kühlendem Wasserstoff (3) umfasst, wobei der Sauerstoffkreislauf (190) mindestens einen Sauerstoffkompressor (12) umfasst, der stromaufwärts des Sauerstoffstromentspannungssystems (13) angeordnet ist, wobei das Sauerstoffstromentspannungssystem (13) eine Entspannungsturbine (13) umfasst, **dadurch gekennzeichnet, dass** die Entspannungsturbine (13) und der Kompressor (12) mit einer gleichen rotierenden Welle (14) gekoppelt sind, um Entspannungsarbeit des Sauerstoffstroms unter Druck in den Kompressor (12) zum Komprimieren des Sauerstoffstroms stromaufwärts der Turbine (13) zu übertragen.

2. Anlage nach Anspruch 1, **dadurch gekennzeichnet, dass** die Einheit, die die Entspannungsturbine (13) und den Kompressor (12) umfasst, die mit einer gleichen rotierenden Welle (14) gekoppelt sind, ein passives mechanisches System ist, d. h. dass sie keinen anderen Motor zum Antrieb der rotierenden Welle (14) als den Sauerstoffstrom umfasst, oder dass die Einheit, die die Entspannungsturbine (13) und den Kompressor (12) umfasst, die mit einer gleichen rotierenden Welle (14) gekoppelt sind, ein aktives mechanisches System ist, d. h. einen Motor zum Antrieb der rotierenden Welle (14) aufweist.

3. Anlage nach Anspruch 1 oder 2, **dadurch gekennzeichnet, dass** der Sauerstoffkreislauf (190) mehrere in Reihe und/oder parallel stromaufwärts des Sauerstoffstromentspannungssystems (13) angeordnete Sauerstoffkompressoren (12) umfasst, wobei das Sauerstoffstromentspannungssystem eine Mehrzahl an Entspannungsturbinen (13) umfasst, und dadurch, dass jeder der Kompressoren (12) mit einer rotierenden Welle (14) gekoppelt ist, an die auch mindestens eine Turbine (13) gekoppelt ist.

4. Anlage nach einem der Ansprüche 1 bis 3, **dadurch gekennzeichnet, dass** der Sauerstoffkreislauf (190) mehrere in Reihe stromaufwärts des Sauerstoffstromentspannungssystems (13) angeordnete Kompressoren (12) umfasst, wobei das Sauerstoffstromentspannungssystem (13) eine Mehrzahl an Entspannungsturbinen (13) umfasst, und dadurch, dass die Kompressoren und Turbinen (13) jeweils paarweise an rotierende Wellen (14) gekoppelt sind.

5. Anlage nach einem der Ansprüche 3 und 4, **dadurch gekennzeichnet, dass** die Turbinen (14) in Reihe im Sauerstoffkreislauf (190) angeordnet sind, wobei der Sauerstoffkreislauf (190) jeweils getrennte Wärmeaustauschabschnitte zwischen der Wärmetauschereinheit bzw. der Einheit von Wärmetauschern (4, 5, 6, 7, 8) und dem Sauerstoffstrom am Auslass jeder Turbine (13) umfasst, wobei die Anlage gegebenenfalls ein System (21) zur Kühlung des Sauerstoffs am Auslass zumindest eines Teils der Kompressoren (12) umfasst.

6. Anlage nach einem der Ansprüche 1 bis 5, **dadurch gekennzeichnet, dass** die Wärmetauschereinheit bzw. die Einheit von Wärmetauschern (4, 5, 6, 7, 8) mehrere Wärmetauscher umfasst, die in Reihe und im Wärmeaustausch mit dem Kreislauf von zu kühlendem Wasserstoff (3) zwischen dem stromaufwärts und dem stromabwärts gelegenen Ende des Kreislauf von zu kühlendem Wasserstoff (3) angeordnet sind.

7. Anlage nach Anspruch 6, **dadurch gekennzeichnet, dass** sie eine erste Kühlvorrichtung (9) und eine zweite Kühlvorrichtung (10) aufweist, die im Wärmeaustausch mit dem Kreislauf von zu kühlendem Wasserstoff (3) stehen, wobei die erste Kühlvorrichtung (9) im Wärmeaustausch mit einer ersten Wärmetauschergruppe bzw. Gruppe von Wärmetauschern (4, 5, 6, 7) der Wärmetauschereinheit bzw. der Einheit von Wärmetauschern (4, 5, 6, 7, 8) steht, wobei die zweite Kühlvorrichtung (10) im Wärmeaustausch mit einer zweiten Gruppe von Wärmetauschern (8) steht, wobei die erste Wärmetauschergruppe bzw. Gruppe von Wärmetauschern (4, 5, 6, 7) sich stromaufwärts der zweiten Gruppe von Wärmetauschern (8) im Kreislauf von zu kühlendem Wasserstoff (3) befindet, und dadurch, dass die erste Kühlvorrichtung (9) den Wärmeaustausch zwischen dem entspannten Sauerstoffstrom und dem Kreislauf von zu kühlendem Wasserstoff (3) umfasst, so dass eine Vorkühlung des Wasserstoffkreislaufs (3) vor der zusätzlichen Kühlung, die durch die zweite Kühlvorrichtung (10) erfolgt, sichergestellt wird.

8. Anlage nach Anspruch 7, **dadurch gekennzeichnet, dass** die zweite Kühlvorrichtung (10) ein Kühlgerät mit einem Kühlkreislauf eines Kreislaufgases umfasst, wobei das Kühlgerät der zweiten Kühlvorrichtung (10), in Reihe in einem Kreislauf angeordnet, Folgendes umfasst: einen Mechanismus zur Kompression des zweiten Kreislaufgases (15), ein Element (24) zum Kühlen des zweiten Kreislaufgases, einen Mechanismus (16) zum Entspannen des zweiten Kreislaufgases und ein Element (8) zum Erhitzen des entspannten zweiten Kreislaufgases.

9. Anlage nach Anspruch 7 oder 8, **dadurch gekennzeichnet, dass** sie eine dritte Kühlvorrichtung (17) umfasst, die im Wärmeaustausch mit mindestens einem Teil der ersten Wärmetauschergruppe bzw. Gruppe von Wärmetauschern (4, 5, 6, 7) steht.

10. Anlage nach einem der Ansprüche 1 bis 9, **dadurch gekennzeichnet, dass** der Kreislauf von zu kühlendem Wasserstoff (3) ein System (18) zum Entspannen des Wasserstoffstroms umfasst, wobei der Kreislauf von zu kühlendem Wasserstoff (3) mindestens einen Wasserstoffkompressor (19) stromaufwärts des Wasserstoffstromentspannungssystems (18) umfasst, wobei das Wasserstoffstromentspannungssystem (18) eine Entspannungsturbine (18) umfasst, und dadurch, dass die Entspannungsturbine (18) und der Kompressor (19) mit einer gleichen rotierenden Welle (20) gekoppelt sind, um Entspannungsarbeit des Wasserstoffstroms unter Druck in den Kompressor (19) zum Komprimieren des Wasserstoffstroms stromaufwärts der Turbine (18) zu übertragen.

11. Anlage nach Anspruch 10, **dadurch gekennzeichnet, dass** die mit einer gleichen rotierenden Welle (20) gekoppelte Einheit von Entspannungsturbine (18) und Kompressor (19) ein passives mechanisches System ist, d. h. dass sie keinen anderen Motor zum Antrieb der rotierenden Welle (20) als den Wasserstoffstrom umfasst.

12. Anlage nach Anspruch 10 oder 11, **dadurch gekennzeichnet, dass** der Wasserstoffkreislauf (3) mehrere Wasserstoffkompressoren (19) umfasst, die in Reihe und/oder parallel stromaufwärts des Wasserstoffstromentspannungssystems (18) angeordnet sind, wobei das Wasserstoffstromentspannungssystem eine Mehrzahl von in Reihe und/oder parallel angeordneten Entspannungsturbinen (18) umfasst, und dadurch, dass jeder der Kompressoren (19) mit einer rotierenden Welle (20) gekoppelt ist, mit der auch mindestens eine Turbine (18) gekoppelt ist.

13. Anlage nach Anspruch 11 oder 12, **dadurch gekennzeichnet, dass** der Kreislauf von zu kühlendem Wasserstoff (3) mehrere in Reihe stromaufwärts des Wasserstoffstromentspannungssystems (18) angeordnete Kompressoren (19) umfasst, wobei das Wasserstoffstromentspannungssystem eine Mehrzahl an in Reihe angeordneten Entspannungsturbinen (18) umfasst, und dadurch, dass die Kompressoren und Turbinen (18) paarweise mit entsprechenden rotierenden Wellen (20) gekoppelt sind.

14. Anlage nach Anspruch 11 oder 12, **dadurch gekennzeichnet, dass** die Turbinen (18) in Reihe in dem Kreislauf von zu kühlendem Wasserstoff (3) angeordnet sind, wobei der Kreislauf von zu kühlendem Wasserstoff (3) jeweils getrennte Wärmeaustauschabschnitte zwischen der Wärmetauschereinheit bzw. der Einheit von Wärmetauschern (4, 5, 6, 7, 8) und dem Wasserstoffstrom am Auslass jeder Turbine (18) aufweist.

15. Anlage nach einem der Ansprüche 7 bis 8 in Kombination mit einem der Ansprüche 9 bis 13, **dadurch gekennzeichnet, dass** sich das Wasserstoffstromentspannungssystem (18) an einem Teil des Kreislaufs von zu kühlendem Wasserstoff (3) befindet, der im Wärmeaustausch mit der ersten Wärmetauschergruppe bzw. Gruppe von Wärmetauschern (4, 5, 6, 7) steht.

16. Anlage nach einem der Ansprüche 7 bis 8 in Kombination mit einem der Ansprüche 9 bis 13, **dadurch gekennzeichnet, dass** sich das Wasserstoffstromentspannungssystem (18) an einem Teil des Kreislaufs von zu kühlendem Wasserstoff (3) befindet, der im Wärmeaustausch mit der zweiten Wärmetauschergruppe bzw. Gruppe von Wärmetauschern (8) steht.

17. Anlage nach einem der Ansprüche 12 bis 16, **dadurch gekennzeichnet, dass** sie ein Wasserstoffskühlsystem (22) am Auslass wenigstens eines Teils der Kompressoren (19) umfasst.

18. Verfahren zur Herstellung von Wasserstoff bei Kryogen-Temperatur, insbesondere von Flüssigwasserstoff, unter Verwendung einer Anlage (1) nach einem der vorhergehenden Ansprüche, wobei das Verfahren einen Schritt der Bereitstellung, durch den Elektrolyseur (2), eines Wasserstoffstroms am stromaufwärts gelegenen Ende des Wasserstoffkreislaufs (3), zum Beispiel bei einem Druck zwischen 15 und 150 bar, einen Schritt der Bereitstellung, durch den Elektrolyseur (2), eines Sauerstoffstroms am stromaufwärts gelegenen Ende des Sauerstoffkreislaufs (190), zum Beispiel bei einem Druck zwischen 15 und 150 bar, umfasst, wobei das Verfahren einen Schritt der Kompression und der anschließenden Entspannung des Sauerstoffstroms umfasst, wobei die Entspannung durch die mindestens eine Turbine (13) erfolgt, die mit der Welle (14) gekoppelt ist, wobei die Welle (14) außerdem mit mindestens einem Kompressor (12) gekoppelt ist, so dass die Kompression des Sauerstoffstroms vor seiner Entspannung sichergestellt wird, wobei das Verfahren einen Wärmeaustausch zwischen dem entspannten Sauerstoffstrom mit dem Wasserstoffstrom zu dessen Kühlung umfasst.

19. Verfahren nach Anspruch 18, **dadurch gekennzeichnet, dass** das Verfahren einen Schritt der Kompression und der anschließenden Entspannung des Wasserstoffstroms zu dessen Kühlung umfasst, wobei die Entspannung durch mindestens eine Turbine (18) erfolgt, die mit einer Welle (20) gekoppelt ist, wobei die Welle (20) außerdem mit mindestens einem Kompressor (19) gekoppelt ist, so dass die Kompression des Wasserstoffstroms vor dessen Entspannung sichergestellt wird.

## Claims

1. Plant for producing hydrogen at cryogenic temperature, in particular liquefied hydrogen, comprising an electrolyzer (2) provided with an oxygen outlet and a hydrogen outlet, and a circuit (3) for hydrogen to be cooled, comprising an upstream end connected to the hydrogen outlet and a downstream end intended to be connected to a member (23) for collecting cooled and/or liquefied hydrogen, the plant (1) comprising a set of heat exchanger(s) (4, 5, 6, 7, 8) exchanging heat with the circuit (3) for hydrogen to be cooled, the plant (1) comprising at least one cooling device (9, 10) exchanging heat with at least part of the set of heat exchanger(s) (4, 5, 6, 7, 8), the plant (1) comprising an oxygen circuit (190) comprising an upstream end connected to the oxygen outlet and a downstream end (11), the oxygen circuit (190) comprising an oxygen flow expansion system (13) and at least one exchange of heat between the expanded oxygen flow and the circuit (3) for hydrogen to be cooled, the oxygen circuit (190) comprising at least one oxygen compressor (12) arranged upstream of the oxygen flow expansion system (13), the oxygen flow expansion system (13) comprising an expansion turbine (13), **characterized in that** said expansion turbine (13) and said compressor (12) are coupled to the same rotary shaft (14) to transfer work of expanding the oxygen flow under pressure to the compressor (12) to compress the oxygen flow upstream of the turbine (13).

2. Plant according to Claim 1, **characterized in that** the assembly comprising the expansion turbine (13) and the compressor (12) coupled to the same rotary shaft (14) is a passive mechanical system, that is to say that it does not include a motor for driving the rotary shaft (14) other than the oxygen flow, or the assembly comprising the expansion turbine (13) and the compressor (12) coupled to the same rotary shaft (14) is an active mechanical system, that is to say including a motor for driving the rotary shaft (14).

3. Plant according to Claim 1 or 2, **characterized in that** the oxygen circuit (190) comprises several oxygen compressors (12) arranged in series and/or in parallel upstream of the oxygen flow expansion system (13), the oxygen flow expansion system comprising a plurality of expansion turbines (13), and **in that** each of the compressors (12) is coupled to a rotary shaft (14) to which at least one turbine (13) is also coupled.

4. Plant according to any one of Claims 1 to 3, **characterized in that** the oxygen circuit (190) comprises several compressors (12) arranged in series upstream of the oxygen flow expansion system (13), the oxygen flow expansion system (13) comprising a plurality of expansion turbines (13), and **in that** the compressors and turbines (13) are coupled in pairs to respective rotary shafts (14) .

5. Plant according to either one of Claims 3 and 4, **characterized in that** the turbines (14) are arranged in series in the oxygen circuit (190), the oxygen circuit (190) comprising separate respective portions for heat exchange between the set of heat exchanger(s) (4, 5, 6, 7, 8) and the oxygen flow at the outlet of each turbine (13), the plant possibly comprising a system (21) for cooling the oxygen at the outlet of at least some of the compressors (12).

6. Plant according to any one of Claims 1 to 5, **characterized in that** the set of heat exchanger(s) (4, 5, 6, 7, 8) comprises several heat exchangers arranged in series and exchanging heat with the circuit (3) for hydrogen to be cooled, between the upstream and downstream ends of the circuit (3) for hydrogen to be cooled.

7. Plant according to Claim 6, **characterized in that** it comprises a first cooling device (9) and a second cooling device (10) exchanging heat with the circuit (3) for hydrogen to be cooled, the first cooling device (9) exchanging heat with a first group of heat exchanger(s) (4, 5, 6, 7) of the set of heat exchanger (s) (4, 5, 6, 7, 8), the second cooling device (10) exchanging heat with a second group of heat exchangers (8), the first group of heat exchanger(s) (4, 5, 6, 7) being located upstream of the second group of heat exchangers (8) in the circuit (3) for hydrogen to be cooled, and **in that** the first cooling device (9) comprises the exchange of heat between the expanded oxygen flow and the circuit (3) for hydrogen to be cooled to ensure pre-cooling of the hydrogen circuit (3) before the additional cooling carried out by the second cooling device (10).

8. Plant according to Claim 7, **characterized in that** the second cooling device (10) comprises a cycle gas refrigeration cycle refrigerator, in which the refrigerator of the second cooling device (10) comprises, arranged in series in a cycle circuit: a mechanism (15) for compressing the second cycle gas, a member (24) for cooling the second cycle gas, a mechanism (16) for expanding the second cycle gas and a member (8) for heating the expanded second cycle gas.

9. Plant according to Claim 7 or 8, **characterized in that** it comprises a third cooling device (17) exchanging heat with at least part of the first group of heat exchanger(s) (4, 5, 6, 7) .

10. Plant according to any one of Claims 1 to 9, **characterized in that** the circuit (3) for hydrogen to be cooled comprises a hydrogen flow expansion system (18), the circuit (3) for hydrogen to be cooled comprising at least one hydrogen compressor (19) upstream of the hydrogen flow expansion system (18), the hydrogen flow expansion system (18) comprising an expansion turbine (18), and **in that** said expansion turbine (18) and said compressor (19) are coupled to the same rotary shaft (20) to transfer work of expanding the hydrogen flow under pressure to the compressor (19) to compress the hydrogen flow upstream of the turbine (18).

11. Plant according to Claim 10, **characterized in that** the assembly with expansion turbine (18) and compressor (19) coupled to the same rotary shaft (20) is a passive mechanical system, that is to say that it does not include a motor for driving the rotary shaft (20) other than the hydrogen flow.

12. Plant according to Claim 10 or 11, **characterized in that** the hydrogen circuit (3) comprises several hydrogen compressors (19) arranged in series and/or in parallel upstream of the hydrogen flow expansion system (18), the hydrogen flow expansion system comprising a plurality of expansion turbines (18) arranged in series and/or in parallel, and **in that** each of the compressors (19) is coupled to a rotary shaft (20) to which at least one turbine (18) is also coupled.

13. Plant according to Claim 11 or 12, **characterized in that** the circuit (3) for hydrogen to be cooled comprises several compressors (19) arranged in series upstream of the hydrogen flow expansion system (18), the hydrogen flow expansion system comprising a plurality of expansion turbines (18) arranged in series, and **in that** the compressors and turbines (18) are coupled in pairs to respective rotary shafts (20).

14. Plant according to Claim 11 or 12, **characterized in that** the turbines (18) are arranged in series in the circuit (3) for hydrogen to be cooled, the circuit (3) for hydrogen to be cooled comprising separate respective portions for heat exchange between the set of heat exchanger(s) (4, 5, 6, 7, 8) and the hydrogen flow at the outlet of each turbine (18).

15. Plant according to either one of Claims 7 and 8 in conjunction with any one of Claims 9 to 13, **characterized in that** the hydrogen flow expansion system (18) is located on a portion of the circuit (3) for hydrogen to be cooled exchanging heat with the first group of heat exchanger(s) (4, 5, 6, 7) .

16. Plant according to either one of Claims 7 and 8 in conjunction with any one of Claims 9 to 13, **characterized in that** the hydrogen flow expansion system (18) is located on a portion of the circuit (3) for hydrogen to be cooled exchanging heat with the second group of heat exchanger(s) (8).

17. Plant according to any one of Claims 12 to 16, **characterized in that** it comprises a system (22) for cooling hydrogen at the outlet of at least some of the compressors (19).

18. Method for producing hydrogen at cryogenic temperature, in particular liquefied hydrogen, using a plant (1) according to any one of the preceding claims, the method comprising a step of supplying, by the electrolyzer (2), a hydrogen flow to the upstream end of the hydrogen circuit (3), for example at a pressure of between 15 and 150 bar, a step of supplying, by the electrolyzer (2), an oxygen flow to the upstream end of the oxygen circuit (190), for example at a pressure of between 15 and 150 bar, the method comprising a step of compression then expansion of the oxygen flow in which the expansion is carried out by the at least one turbine (13) coupled to the shaft (14), the shaft (14) also being coupled to at least one compressor (12) ensuring the compression of the oxygen flow before its expansion, the method comprising an exchange of heat between the expanded oxygen flow and the hydrogen flow with a view to cooling the same.

19. Method according to Claim 18, **characterized in that** the method comprises a step of compression then expansion of the hydrogen flow with a view to cooling the same, in which the expansion is carried out by at least one turbine (18) coupled to a shaft (20), the shaft (20) also being coupled to at least one compressor (19) ensuring the compression of the hydrogen flow before its expansion.
